# EUROPEAN PATENT SPECIFICATION

(11) **EP 1 490 722 B1**
(45) Date of publication and mention of the grant of the patent: **26.10.2005**
(21) Application number: 03704890.7
(22) Date of filing: 27.02.2003
(51) Int. Cl.: G02B 26/02

(54) **DISPLAY DEVICE COMPRISING A LIGHT TRANSMITTING PLATE AND LIGHT-ABSORBING MEANS**
ANZEIGEVORRICHTUNG MIT EINER LICHTDURCHLÄSSIGEN PLATTE UND EINEM LICHTABSORBIERENDEN MITTEL
AFFICHEUR COMPRENANT UNE PREMIERE PLAQUE A EMISSION DE LUMIERE ET UN ABSORBEUR DE LUMIERE

(30) Priority: 26.03.2002 EP 02076187
(43) Date of publication of application: 29.12.2004
(73) Proprietor: Koninklijke Philips Electronics N.V., 5621 BA Eindhoven (NL)
(72) Inventor: DUINE, Peter, A., NL-5656 AA Eindhoven (NL); VAN GORKOM, Gerardus, G., P., NL-5656 AA Eindhoven (NL); CREEMERS, Tijsbert, M., H., NL-5656 AA Eindhoven (NL)
(74) Representative: Rolfes, Johannes Gerardus Albertus
(86) International application number: PCT/IB2003/000814
(87) International publication number: WO 2003/081316

(56) References cited:
- WO-A-98/19201
- WO-A-99/28890
- US-A- 4 113 360
- US-A- 5 771 321

## Description

The invention relates to a display device comprising a light transmitting first plate, a second plate facing the first plate, a movable element between the first plate and the second plate able to decouple light out of the first plate, the first plate having a first surface facing away from the movable element and a second surface facing the movable element, and electrodes on the first plate, the second plate and the movable element, able to locally bring the movable element into contact with the first plate by applying voltages to the electrodes.

An embodiment of the display device of the type mentioned in the opening paragraph is known from WO 99/28890.

The known display device comprises a lamp that, in operation, generates light that is coupled into a transparent first plate from a side surface. The light is trapped in the first plate due to reflection at the first and second surface of the first plate, so that this first plate forms a light guide. By applying voltages to the electrodes, the movable element is locally brought into contact with or set free from the light guide plate. At an area where the movable element is in contact with the light guide plate reflection of the light is frustrated and light is decoupled out of the light guide plate and scattered out of the movable element. Areas where light can be decoupled out of the light guide plate are known as picture elements. By regulating whether or not light is decoupled at picture elements an image is represented.

A drawback of the known display device is that it requires, in operation, relatively much energy to represent an image. Furthermore, the contrast of the image is relatively low if ambient light is present and the thickness of the display device is relatively large because of the thickness of the lamp.

It is an object of the invention to provide a display device of the kind mentioned in the opening paragraph, which requires relatively little energy to be operated.

The object is achieved by the display device further comprising light absorption means able to absorb light decoupled out of the first plate by the movable element, and optical coupling means at at least one of the first and the second surface for having light directed into the first plate via the first surface, reflected at the second surface and directed out of the first plate via the first surface, the amount of reflected light at an area of the second surface being relatively large if the movable element is in the area free from contact with the first plate and being relatively small if the movable element is in the area in contact with the first plate.

The inventors have realized that optical coupling means at at least one of the first and second surface provide that, in operation, ambient light enters the first plate, reflects at the second surface and leaves the display device via the first surface. This situation appears at an area where the movable element is not in contact with the first plate. The amount of reflected light that leaves the display device via the first surface is relatively large. However, at an area where the movable element is in contact with the first plate the reflection is frustrated, light is decoupled out of the first plate by the movable element and absorbed by the light absorption means. Therefore, the amount of reflected light that leaves the display device via the first surface is relatively low. In this way the emitted amount of light at picture elements is regulated and an image is represented whereas the need for a lamp as internal light source is obviated. Furthermore, in this arrangement ambient light does not deteriorate the contrast of the displayed image, it generates the contrast. In this display device a picture element emits light if the movable element is locally free from contact with the first plate, in contrast with the display device known from the cited WO 99/28890 where a picture element emits light if the movable element is locally in contact with the first plate.

In an embodiment the optical coupling means comprise a relief structure at the first surface and the second surface is flat. Then the movable element is locally brought in contact with the flat second surface which can easily be achieved. If the relief structure comprises a prismatic relief the light is efficiently directed into and out of the first plate. This one-directional pattern at the first surfaces causes an anisotropy in the displayed image with respect to the viewer of the displayed image. If the pattern is two-directional, e.g. the relief structure comprises a pyramidal relief, this anisotropy is relatively small.

In a preferred embodiment the pyramidal relief comprises pyramids having opposing side surfaces enclosing a top angle, the top angle being smaller than a predetermined top angle ta, defined in degrees by a relation n sin (90°-ta/2-Arcsin(l/n)) = sin (90°-ta/2), wherein n represents an index of refraction of the first plate. The relation between the predetermined top angle ta and the index of refraction n of the first plate follows from the condition that light directed towards the first surface perpendicular to the second surface is reflected at the second surface. This implies then also that an amount of the ambient light directed towards the first surface substantially perpendicular to the second surface, hereinafter also denoted as perpendicular light, is reflected at the second surface if the movable element is free from contact with the first plate. If the top angle is larger than the predetermined top angle ta, because the condition of reflection is not satisfied, the perpendicular light is directed out of the first plate via the second surface. The perpendicular light enters a pyramid via a side surface of the pyramid. If the top angle is relatively small compared to the predetermined top angle ta, the perpendicular light is reflected at a surface of the pyramid opposite to the surface of the pyramid via which the light enters the pyramid and is directed out of the first plate via the second surface. In case the top angles of the pyramids have various values between 0 and the predetermined top angle ta , the amount of perpendicular light that is reflected at the second surface if the movable element is free from contact with the first plate is relatively large. If, furthermore, the second surface comprises color-filter elements of at least three primary colors the display device is able to display an image in full color. The color-filter elements allow only light of a specific color, for instance red, green and blue, to pass.

Light absorption means are present to absorb light decoupled out of the first plate by the movable element. If the movable element is light transmitting and light absorption means are present at a surface of the second plate facing the movable element, the light is absorbed after being transmitted through the movable element. However, at a surface of the movable element facing the second plate reflections of the light can occur. Therefore, it is advantageous if the light absorption means comprise the movable element being light absorbing, as the decoupled light is already absorbed in the movable element and the reflections are suppressed. The movable element may for instance comprise carbon to be light absorbing. A further advantage of the presence of carbon is that it provides the movable element with an electrical conductance constituting the electrode on the movable element and therefore obviating a separate conducting layer at the movable element.

In an embodiment the optical coupling means comprise a relief structure at the second surface. The first surface is flat. Ambient light entering the first plate via the first surface is reflected at the relief structure at the second surface and directed out of the first plate through the first surface. This embodiment enables the application of a light passing filter. The amount of light that is reflected at the second surface can be relatively small and relatively large, the latter representing one or two primary colors, if, furthermore,
- the first plate comprises a light passing filter for passing light of a first and a second primary color and absorbing light of a third primary color, the first, the second and the third primary color able to represent full white,
- the relief structure comprises a pyramidal relief, comprising pyramids having opposing side surfaces,
- the movable element facing a first side surface of the pyramid comprises color absorption means for absorbing light of the first primary color if the movable element is in contact with the first side surface, and
- the movable element facing a second side surface of the pyramid opposing the first side surface comprising color absorption means for absorbing light of the second primary color if the movable element is in contact with the second side surface.
   The light is reflected twice at the second surface: at the first and the second side surface of the pyramid. In this way the first and the second primary color are reflected at the second surface, if the movable element is not in contact with the first plate. The following colors can be represented:
   1. black, if the movable element facing the first side surface of the pyramid is in contact with the first side surface and the movable element facing the second side surface of the pyramid is in contact with the second side surface,
   2. the first primary color representing one-third of the intensity of the light, if the movable element facing the first side surface of the pyramid is free from contact with the first side surface and the movable element facing the second side surface of the pyramid is in contact with the second side surface,
   3. the second primary color representing one-third of the intensity of the light, if the movable element facing the first side surface of the pyramid is in contact with the first side surface and the movable element facing the second side surface of the pyramid is free from contact with the second side surface,
   4. the mixed color of the first and second primary color representing two-third of the intensity of the light, if the movable element is not in contact with the first plate.
   The advantage is provided by the fact that for the mixed color the intensity of light is two times the intensity of a primary color. If the light passing filter at the first plate would pass only one primary color the largest intensity to be obtained in this configuration would be one-third of the intensity of the light.

The optical coupling means can also comprise a relief structure at both the first and second surface.

These and other aspects of the invention will be further elucidated and described with reference to the drawings, in which:
Fig. 1 shows schematically a cross sectional view of the display device,
Fig. 2 shows schematically a cross sectional view of part of the display device comprising a relief structure at the first surface in a prismatic relief,
Fig. 3 shows schematically part of the display device comprising a relief structure at the first surface in a pyramidal relief,
Fig. 4 shows schematically a cross sectional view along IV-IV in Fig. 3,
Fig. 5 shows schematically a light absorbing movable element,
Fig. 6 shows schematically a cross sectional view of part of the display device comprising a relief structure at the second surface in a pyramidal relief, and
Fig. 7 shows schematically a cross sectional view of part of the display device comprising a relief structure at the second surface in a pyramidal relief with a light passing filter and color absorbing elements.

The figures are schematic and not drawn to scale and in all the figures same reference numerals refer to corresponding parts.

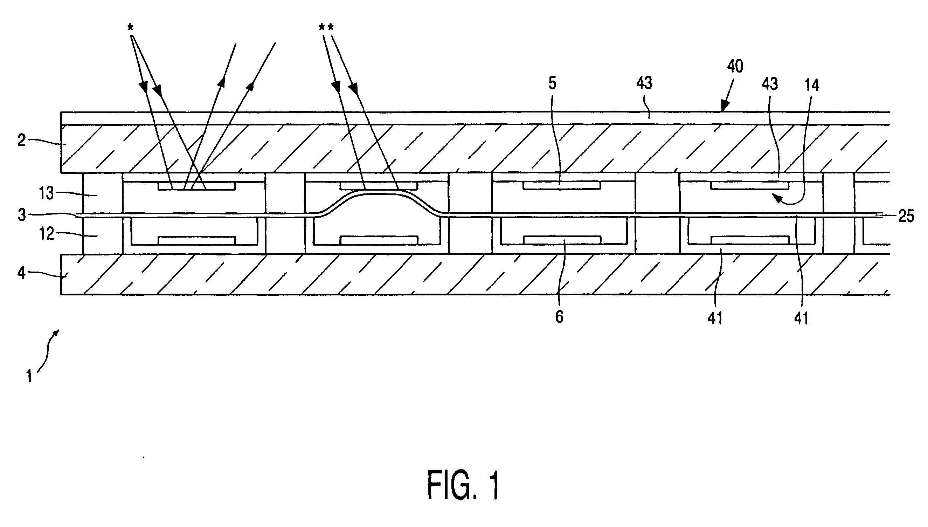

In Fig. 1 the display device 1 comprises a light transmitting first plate 2, a second plate 4 facing the first plate 1, a movable element 3 between the first plate 2 and the second plate 4. The movable element 3 is positioned between the first plate 2 and the second plate 4 by means of spacers 12 and 13. The first plate 2 has a first surface 40 facing away from the movable element 3 and a second surface 14 facing the movable element 3, and electrodes 5, 6 and 25 on the first plate 2, the second plate 4 and the movable element 3, respectively. By applying voltages to the electrodes 5, 6 and 25 the movable element 3 is brought into contact with or set free from the first plate 2. The display device 1 further comprises optical coupling means 43 at at least one of the first surface 40 of the first plate facing away from the movable element 3 and second surface 14 of the first plate 2 facing the movable element 3. The optical coupling means 43 direct ambient light into the first plate 2 via the first surface 40. A relatively large portion of the ambient light directed into the first plate 2 via the first surface 40 is reflected at an area of the second surface 14 and directed out of the first plate 2 via the first surface 40, if the movable element 3 is in the area free from contact with the first plate 2. In the Figure this light is indicated by a *. However, at an area where the movable element 3 is in contact with the first plate 2 the reflection is frustrated, the light is decoupled out of the first plate 2 by the movable element 3 and absorbed by light absorption means 41. Preferably, the movable element 3 is light absorbing, containing, for instance, carbon. In the Figure this light, absorbed by the movable element 3, is indicated by **. In an other embodiment, the movable element 3 is light transmitting and light absorption means 41 are present at a surface of the second plate 4 facing the movable element 3 and at the surface of the spacers 12, for absorbing the light after being transmitted through the movable element 3. In any case, the light absorption means 41 absorb a large portion of the light decoupled out of the first plate 2 by the movable element 3. Therefore, the amount of light reflected at the second surface 14 that leaves the display device 1 via the first surface 40 is relatively low.

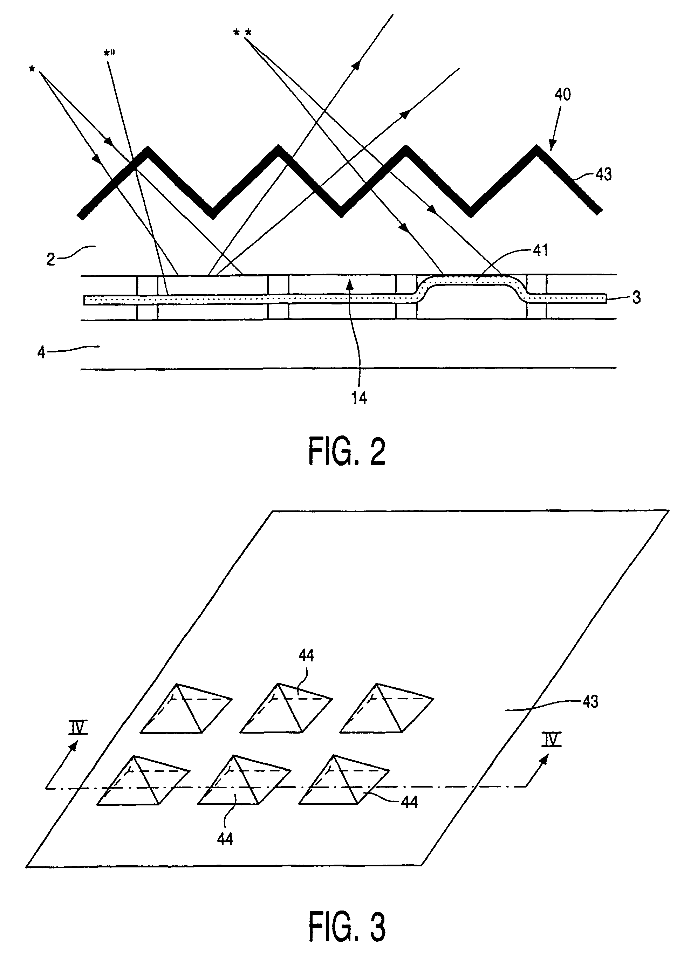

In Fig. 2 the optical coupling means 43 comprise a relief structure comprising a prismatic relief at the first surface 40. The second surface 14 is flat. Ambient light enters the first plate 2 via the prismatic relief. If, at an area of the second surface 14, the movable element 3 is free from contact with the first plate 2 a relatively large portion of the ambient light is reflected at the area and directed out of the first plate 2 via the first surface 40. In the Figure this light is indicated by a *. A portion of the light entering the first plate 2 is not reflected at the second surface 14 but leaves the first plate 2 via the second surface 14 as the light does not satisfy the condition of reflection. An example of such a light ray is indicated in the figure by *". If the movable element 3 is in contact with the first plate 2 a large portion of the light is absorbed by the light absorption means 41 in the movable element 3.

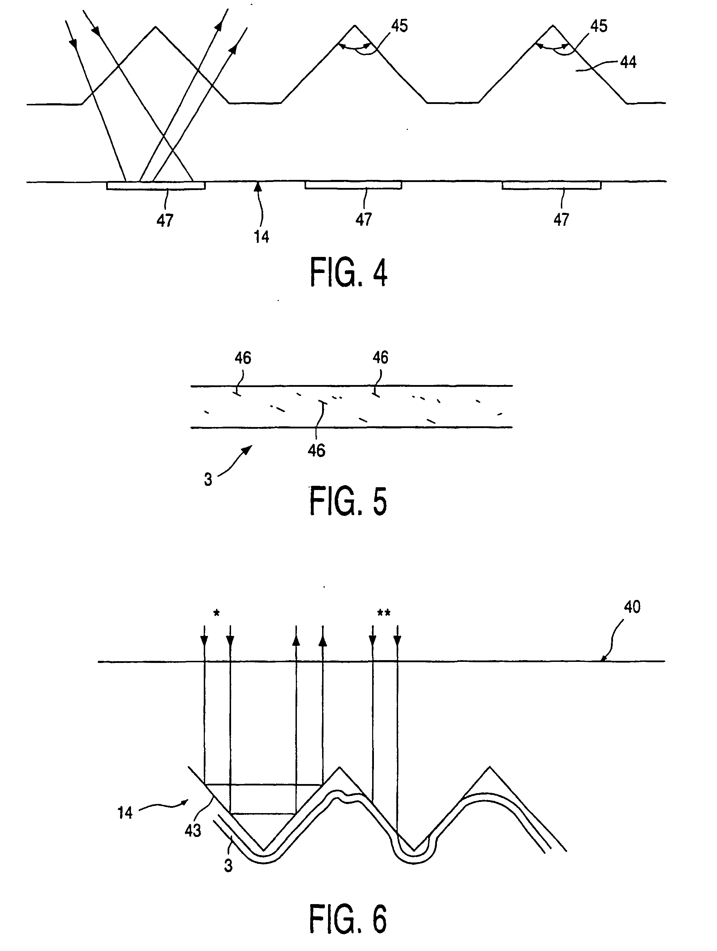

In Fig. 3 the relief structure comprises a pyramidal relief, containing pyramids 44. A cross-section along IV-IV of this relief is shown in Fig. 4 indicating the top angle 45 of a pyramid 44. In the Figure the top angle 45 is between 0 and the predetermined top angle ta. For varying top angles 44 between 0 and the predetermined top angle ta, the amount of perpendicular light that is reflected at the second surface 14 if the movable element 3 is free from contact with the first plate 2 is relatively large. Furthermore, color filter elements 47 are present at the second surface 14. The second surface 14 comprises three different primary color filter elements. Each color-filter 47 element allows only light of a specific color, for instance red, green and blue, to pass. Therefore the display device 1 is able to display an image in full color.

In Fig. 5 the light absorption means 41 comprise a light absorbing movable element 3. The movable element 3 comprises for instance carbon particles 46.

In Fig. 6 the optical coupling means 43 comprise a relief structure at the second surface 14 in a pyramidal relief. The first surface 40 is flat. Ambient light enters the first plate 2 via the first surface 40. If the movable element 3 is free from contact with the first plate 2 the light is reflected at two side surfaces of a pyramid 44, the one side surface of the pyramid 44 opposing the other side surface, and directed out of the first plate 2 via the first surface 40. In the Figure this light is indicated by a *. If, at one of the two side surfaces of a pyramid 44 opposing each other, the movable element 3 is in contact with a side surface, light is absorbed in the movable element 3. In the Figure this light is indicated by **.

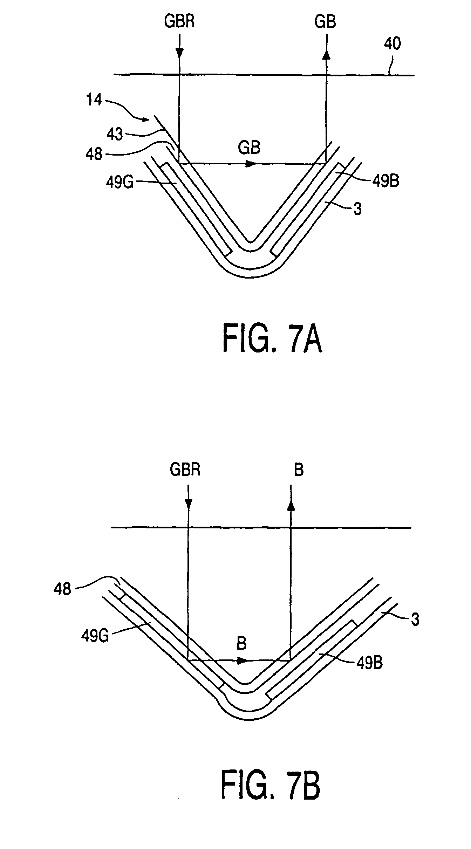

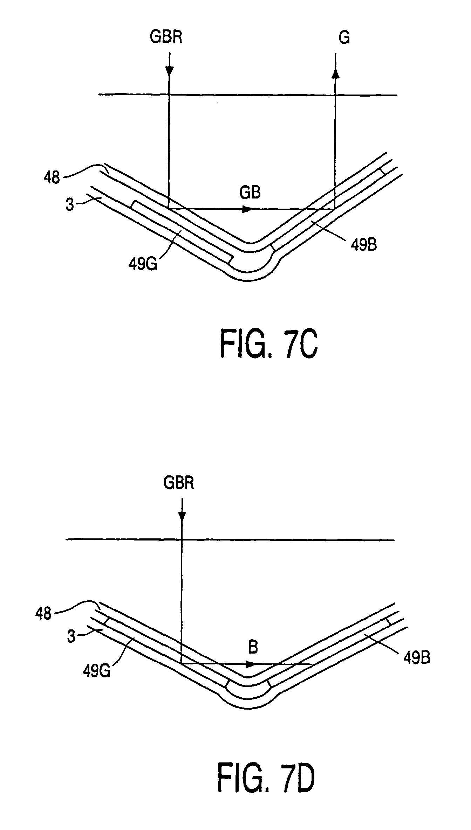

In Fig. 7 the optical coupling means 43 comprise a pyramidal relief at the second surface 14. The first surface 40 is flat. A light passing filter 48, present at the second surface 14, passes light of a first and a second primary color and absorbs light of a third primary color, the first, the second and the third primary color together able to represent full white. In the figure this light passing filter 48 passes the primary colors is green and blue and absorbs the primary color red. The light passing filter 48 is a so-called Cyan pass filter as the color cyan consists of the primary colors green and blue. The movable element 3 facing a first side surface of the pyramid 44 comprises color absorption means 49 for absorbing light of the first primary color, here green and in the figure indicated by color absorbing element 49G for absorbing the green color, if the movable element 3 is in contact with the first side surface. Furthermore, the movable element 3 facing a second side surface of the pyramid 44 opposing the first side surface comprises color absorption means 49 for absorbing light of the second primary color, here blue and into the figure indicated by color absorbing element 49B for absorbing the blue color, if the movable element 3 is in contact with the second side surface. Figure 7 shows how different colors can be represented. Figure 7a shows how the mixed color of the first and second primary color is represented. The movable element 3 is then not in contact with the first plate 2. Light containing all three primary colors, green blue and red, enters the first plate 2 via the first surface 40. The Cyan light passing filter 48 absorbs the third primary color, red. The light, containing the first and second primary color, green and blue, is reflected twice and directed out of the first plate 2 via the first surface 40, representing two-third of the intensity of the light. Figure 7b shows how the second primary color, blue, is represented. Then the movable element 3 facing the first side surface of the pyramid 44 is in contact with the first side surface and the movable element 3 facing the second side surface of the pyramid 44 is free from contact with the second side surface. At the first side surface of the pyramid 44 only the second primary color, blue, is reflected as the color absorbing element 49G absorbs the green color at this side surface. At the second side surface of the pyramid 44 the movable element 3 is free from contact with the second side surface and the blue light is reflected and directed out of the first plate 2 via the first surface 40, representing only one-third of the intensity of the light. Figure 7c shows how the first primary color, green, is represented. Then the movable element 3 facing the first side surface of the pyramid 44 is free from contact with the first side surface and the movable element 3 facing the second side surface of the pyramid 44 is in contact with the second side surface. At the first side surface of the pyramid 44, the first and second primary color, green and blue, are reflected. At the second side surface of the pyramid 44 the movable element 3 is in contact with the second side surface and the color absorbing element 49B absorbs the blue color. Only the green light is reflected and directed out of the first plate 2 via the first surface 40, representing only one-third of the intensity of the light. Figure 7d shows how black is represented. Then the movable element 3 facing the first side surface of the pyramid 44 is in contact with the first side surface and only the blue color is reflected, and the movable element 3 facing the second side surface of the pyramid 44 is in contact with the second side surface, and now also the blue color is absorbed. No light is reflected at the second side surface. In stead of a Cyan pass filter other light passing filters 48 can be used passing two different primary colors, for instance Magenta light passing filter 48 passing red and blue and Yellow light passing filter 48 passing red and green.

## Claims

1. A display device (1) comprising a light transmitting first plate (2), a second plate (4) facing the first plate (2), a movable element (3) between the first plate (2) and the second plate (4) able to decouple light out of the first plate (2), the first plate (2) having a first surface (40) facing away from the movable element (3) and a second surface (14) facing the movable element (3), and electrodes (5, 6, 25) on the first plate (2), the second plate (4) and the movable element (3), able to locally bring the movable element (3) into contact with the first plate (2) by applying voltages to the electrodes (5, 6, 25) **characterized in** further comprising light absorption means (41) able to absorb light decoupled out of the first plate (2) by the movable element (3), and optical coupling means (43) at at least one of the first surface (40) and the second surface (14) for having light directed into the first plate (2) via the first surface (40), reflected at the second surface (14) and directed out of the first plate (2) via the first surface (40), the amount of reflected light at an area of the second surface (14) being relatively large if the movable element (3) is in the area free from contact with the first plate (2) and being relatively small if the movable element is in the area in contact with the first plate (2).

2. A display device as claimed in claim 1 **characterized in that** the optical coupling means comprise a relief structure at the first surface.

3. A display device as claimed in claim 2 **characterized in that** the relief structure comprises a prismatic relief.

4. A display device as claimed in claim 2 **characterized in that** the relief structure comprises a pyramidal relief.

5. A display device as claimed in claim 4 **characterized in that** the pyramidal relief comprises pyramids having opposing side surfaces enclosing a top angle, the top angle being smaller than a predetermined top angle ta, defined in degrees by a relation n sin (90°-ta/2-Arcsin(l/n)) = sin (90°-ta/2), wherein n represents an index of refraction of the first plate.

6. A display device as claimed in claim 5 **characterized in that** the top angles of the pyramids have various values between 0 and the predetermined top angle ta.

7. A display device as claimed in claim 6 **characterized in that** the second surface comprises color-filter elements of at least three primary colors.

8. A display device as claimed in claim 1 **characterized in that** the light absorption means comprise the movable element being light absorbing.

9. A display device as claimed in claim 1 **characterized in that** the optical coupling means comprise a relief structure at the second surface.

10. A display device as claimed in claim 9 **characterized in that**
- the first plate comprises a light passing filter for passing light of a first and a second primary color and absorbing light of a third primary color, the first, the second and the third primary color able to represent full white,
- the relief structure comprises a pyramidal relief, comprising pyramids having opposing side surfaces,
- the movable element facing a first side surface of the pyramid comprises color absorption means for absorbing light of the first primary color if the movable element is in contact with the first side surface, and
- the movable element facing a second side surface of the pyramid opposing the first side surface comprising color absorption means for absorbing light of the second primary color if the movable element is in contact with the second side surface.

## Patentansprüche

1. Anzeigevorrichtung (1) mit einer lichtdurchlässigen, ersten Platte (2), einer, der ersten Platte (2) gegenüberliegenden, zweiten Platte (4), einem beweglichen Element (3) zwischen der ersten Platte (2) und der zweiten Platte (4), welches Licht aus der ersten Platte (2) auskoppeln kann, wobei die erste Platte (2) eine erste Oberfläche (40), welche von dem beweglichen Element (3) abgewandt ist, und eine zweite Oberfläche 14), welche dem beweglichen Element (3) zugewandt ist, aufweist, sowie Elektroden (5,6,25) auf der ersten Platte (2), der zweiten Platte (4) und dem beweglichen Element (3), welche das bewegliche Element (3) durch Anlegen von Spannungen an die Elektroden (5,6,25) in Kontakt mit der ersten Platte (2) bringen können, **dadurch gekennzeichnet, dass** sie weiterhin Lichtabsorptionsmittel (41), um durch das bewegliche Element (3) aus der ersten Platte(2) ausgekoppeltes Licht zu absorbieren, sowie optische Kopplungsmittel (43) auf mindestens einer der ersten Oberfläche (40) und der zweiten Oberfläche (14) aufweist, damit Licht über die erste Oberfläche(40) in die erste Platte (2) gerichtet, an der zweiten Oberfläche (14) reflektiert und über die erste Oberfläche (40) aus der ersten Platte (2) heraus gerichtet wird, wobei die Menge des reflektierten Lichts in einem Bereich der zweiten Oberfläche (14) relativ groß ist, wenn sich das bewegliche Element (3) in dem mit der ersten Platte (2) nicht in Kontakt stehenden Bereich befindet und relativ klein ist, wenn sich das bewegliche Element in dem mit der ersten Platte (2) in Kontakt stehenden Bereich befindet.

2. Anzeigevorrichtung nach Anspruch 1, **dadurch gekennzeichnet, dass** die optischen Kopplungsmittel eine Reliefstruktur auf der ersten Oberfläche aufweisen.

3. Anzeigevorrichtung nach Anspruch 2, **dadurch gekennzeichnet, dass** die Reliefstruktur ein prismenförmiges Relief aufweist.

4. Anzeigevorrichtung nach Anspruch 2, **dadurch gekennzeichnet, dass** die Reliefstruktur ein pyramidenförmiges Relief aufweist.

5. Anzeigevorrichtung nach Anspruch 4, **dadurch gekennzeichnet, dass** das pyramidenförmige Relief Pyramiden mit, einen oberen Winkel einschließenden, gegenüberliegende Seiten aufweist, wobei der obere Winkel kleiner als ein vorgegebener, oberer Winkel ta, definiert in Grad durch eine Relation n sin (90°-ta/2-arcsin(l/n)) = sin (90°-ta/2), ist, wobei n eine Brechzahl der ersten Platte darstellt.

6. Anzeigevorrichtung nach Anspruch 5, **dadurch gekennzeichnet, dass** die oberen Winkel der Pyramiden Werte zwischen 0 und dem vorgegebenen, oberen Winkel ta aufweisen.

7. Anzeigevorrichtung nach Anspruch 6, **dadurch gekennzeichnet, dass** die zweite Oberfläche Farbfilterelemente von mindestens drei Primärfarben aufweist.

8. Anzeigevorrichtung nach Anspruch 1, **dadurch gekennzeichnet, dass** die Lichtabsorptionsmittel das Licht absorbierende, bewegliche Element aufweisen.

9. Anzeigevorrichtung nach Anspruch 1, **dadurch gekennzeichnet, dass** die optischen Kopplungsmittel eine Reliefstruktur auf der zweiten Oberfläche aufweisen.

10. Anzeigevorrichtung nach Anspruch 9, **dadurch gekennzeichnet, dass**
- die erste Platte ein Lichtdurchlassfilter aufweist, um Licht einer ersten und einer zweiten Primärfarbe durchzulassen und Licht einer dritten Primärfarbe zu absorbieren, wobei die erste, die zweite und die dritte Primärfarbe ein Vollweiß darstellen können,
- die Reliefstruktur ein pyramidenförmiges Relief mit Pyramiden, welche gegenüberliegende Seitenflächen vorsehen, aufweist,
- das einer ersten Seitenfläche der Pyramide zugewandte, bewegliche Element Farbabsorptionsmittel aufweist, um Licht der ersten Primärfarbe zu absorbieren, wenn sich das bewegliche Element in Kontakt mit der ersten Seitenfläche befindet, und
- das bewegliche Element, welches einer, der ersten Seitenfläche gegenüberliegenden, zweiten Seitenfläche der Pyramide zugewandt ist, Farbabsorptionsmittel aufweist, um Licht der zweiten Primärfarbe zu absorbieren, wenn sich das bewegliche Element in Kontakt mit der zweiten Seitenfläche befindet.

## Revendications

1. Dispositif d'affichage (1) comprenant une première plaque transmettant la lumière (2), une deuxième plaque (4) située en face de la première plaque (2), un élément mobile (3) situé entre la première plaque (2) et la deuxième plaque (4) et pouvant sortir de la lumière de la première plaque (2), la première plaque (2) présentant une première surface (40) s'écartant de l'élément mobile (3) et une deuxième surface (14) située en face de l'élément mobile (3), et des électrodes (5, 6 25) présentes sur la première plaque (2), la deuxième plaque (4) et l'élément mobile (3), pouvant porter localement l'élément mobile (3) en contact avec la première plaque (2) par application de tensions aux électrodes, **caractérisé en outre par** la présence de moyens d'absorption de lumière (41) pouvant absorber la lumière sortie de la première plaque (2) par l'élément mobile (3), et de moyens de couplage optique (43) présents à au moins l'une de la première surface (40) et de la deuxième surface (14) pour présenter de la lumière dirigée dans la première plaque (2) par l'intermédiaire de la première surface (40), réfléchie à la deuxième surface (14) et sortie de la première plaque (2) par l'intermédiaire de la première surface (40), la quantité de lumière réfléchie à une région de la deuxième surface (14) étant relativement grande lorsque l'élément mobile (3) se trouve dans la région exempte de contact avec la première plaque (2) et étant relativement petite lorsque l'élément mobile se trouve dans la région en contact avec la première plaque (2).

2. Dispositif d'affichage selon la revendication 1, **caractérisé en ce que** le moyen de couplage optique comprend une structure de relief à la première surface.

3. Dispositif d'affichage selon la revendication 2, **caractérisé en ce que** la structure de relief comprend un relief prismatique.

4. Dispositif d'affichage selon la revendication 2, **caractérisé en ce que** la structure de relief comprend un relief pyramidal.

5. Dispositif d'affichage selon la revendication 4, **caractérisé en ce que** le relief pyramidal comprend des pyramides présentant des surfaces latérales opposées enfermant un angle de sommet, l'angle de sommet étant plus petit qu'un angle de sommet préalablement déterminé ta, défini en degrés par une relation n sin (90° - ta/2-Arcsin (l/n)) = sin (90° - ta/2), expression dans laquelle n représente un indice de réfraction de la première plaque.

6. Dispositif d'affichage selon la revendication 5, **caractérisé en ce que** les angles de sommet des pyramides présentent diverses valeurs comprises entre 0 et l'angle de sommet préalablement déterminé ta.

7. Dispositif d'affichage selon la revendication 6, **caractérisé en ce que** la deuxième surface comprend des éléments de filtrage de couleur d'au moins trois couleurs primaires.

8. Dispositif d'affichage selon la revendication 1, **caractérisé en ce que** les moyens d'absorption de lumière comprennent l'élément mobile pour l'absorption de lumière.

9. Dispositif d'affichage selon la revendication 1, **caractérisé en ce que** les moyens de couplage optique comprennent une structure de relief prévue à la deuxième surface.

10. Dispositif d'affichage selon la revendication 9, **caractérisé en ce que**
- la première plaque comprend un filtre de passage de lumière servant au passage de la lumière présentant une première couleur primaire et une deuxième couleur primaire et à l'absorption de lumière présentant une troisième couleur primaire, les première, deuxième et troisième couleurs primaires pouvant représenter le blanc,
- la structure de relief comprend un relief pyramidal comprenant des pyramides présentant des surfaces latérales opposées,
- l'élément mobile situé en face de la première surface latérale de la pyramide comprend des moyens d'absorption de couleur servant à absorber la lumière présentant la première couleur primaire lorsque l'élément mobile est en contact avec la première surface latérale, et
- l'élément mobile se trouvant en face d'une deuxième surface latérale de la pyramide étant en face de la première surface latérale comprenant des moyens d'absorption de couleur pour l'absorption de la lumière présentant la deuxième couleur primaire lorsque l'élément mobile est en contact avec la deuxième surface latérale.
